# EUROPEAN PATENT APPLICATION

(11) **EP 2 857 679 A1**
(43) Date of publication of application: **08.04.2015**
(21) Application number: 12877928.7
(22) Date of filing: 29.05.2012
(51) Int. Cl.: F03G 3/00, H02K 7/14, H02K 7/116

(54) **ENERGY-SAVING APPARATUS ABLE TO ROTATE IN SEMICIRCLE AND RESET IN REVERSE DIRECTION BY VIRTUE OF GRAVITATIONAL FORCE**

(71) Applicant: Tsai, Jui-An, Taiwan (TW)
(72) Inventor: Tsai, Jui-An, Taiwan (TW)
(74) Representative: Lang, Christian
(86) International application number: PCT/CN2012/000743
(87) International publication number: WO 2013/177720

(57) **Abstract**

An energy saving device rotating a half circle and turning back with the help of gravity is revealed. In the first half cycle of a circle movement, a transmission shaft of a motor rotor is controlled to rotate and further drive a first rotating shaft rotating in one direction by a first speed change gear mechanism. The transmission shaft synchronously drives the motor rotor to rotate a half circle, from a lowest position to a highest position on a circumference of the circle. In the other half cycle, the transmission shaft of the motor rotor stops rotating and the motor rotor returns from the highest position to the lowest position with the help of gravity. Thus the half circle rotation of the motor rotor is completed and the first rotating shaft is driven to rotate in one direction continuously so as to achieve energy saving effect.

## Description

### BACKGROUND OF THE INVENTION

The present invention relates to an energy-saving device, especially to an energy-saving device that rotates a half circle and then turns back with the help of gravity. In the first half cycle of rotation, the motor rotor rotates a half circle from a lowest position to a highest position on a circumference of the circle by a rotating transmission shaft of the motor rotor. In the other half cycle, the transmission shaft of the motor rotor stops rotating and the motor rotor turns back to the lowest position along the same pathway of the above half circle.

Natural sources on the earth including petroleum, coal, etc have been consumed dramatically after industrial resolution. With exhaustion of resources, nuclear energy has been used. However, nuclear energy and waste cause biological hazards and environmental impact. There is much fear of devastation due to main nuclear disasters and radioactive incidents occurred in recent years. Thus renewable energy such as wind, hydropower, tides, sunlight, etc is considered as an alternative fuel in future. Yet the cost of the renewable energy is high and the development is in the beginning stages. Due to difficulties in development of new energy, energy saving is getting more important. In other words, once the energy can be used efficiently and saved more, the power consumption is reduced. For example, automobile companies worldwide are introducing hybrid electric vehicles for saving fuel consumption and lowering emission. In order to meet requirements of energy saving, there is a need to provide an energy saving device providing better energy-saving effect with lower cost and having more applications.

### SUMMARY OF THE INVENTION

Therefore it is a primary object of the present invention to provide an energy saving device that rotates a half circle and turns back with the help of gravity in which a motor rotor rotates a half circle in a first half cycle and then turns backs to the original position by the gravity in the other half cycle. Thus the movement in a circle is completed. The requirement of energy saving is satisfied and the device has more applications.

It is another object of the present invention to provide an energy saving device that rotates a half circle and turns back with the help of gravity. In practice, a plurality of energy saving devices is connected in series so that a first rotating shaft for storage of energy of each energy saving device is connected to form one rotating shaft that is connected to a second rotating shaft for output. Thus a combined energy saving device assembly is formed with improved energy saving effect and having the second rotating shaft with higher energy output or load.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of an embodiment of an energy saving device according to the present invention;

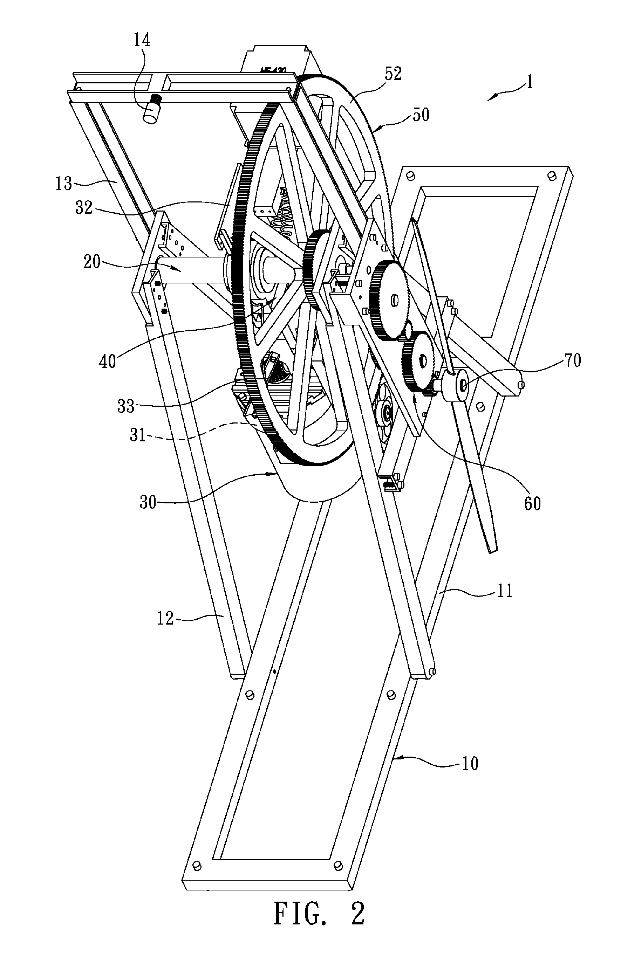

Fig. 2 is a right side perspective view of the embodiment in Fig. 1 according to the present invention;
Fig. 3 is a left side perspective view of the embodiment in Fig. 1 according to the present invention;

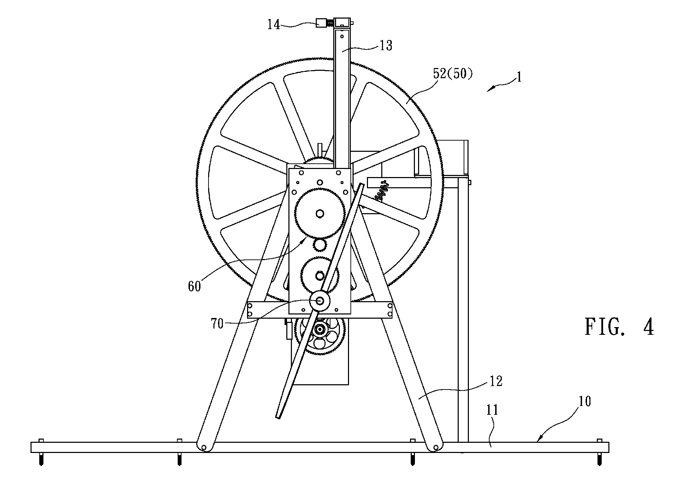

Fig. 4 is a right side view of the embodiment in Fig. 1 according to the present invention;
Fig. 5 is a left side view of the embodiment in Fig. 1 according to the present invention;

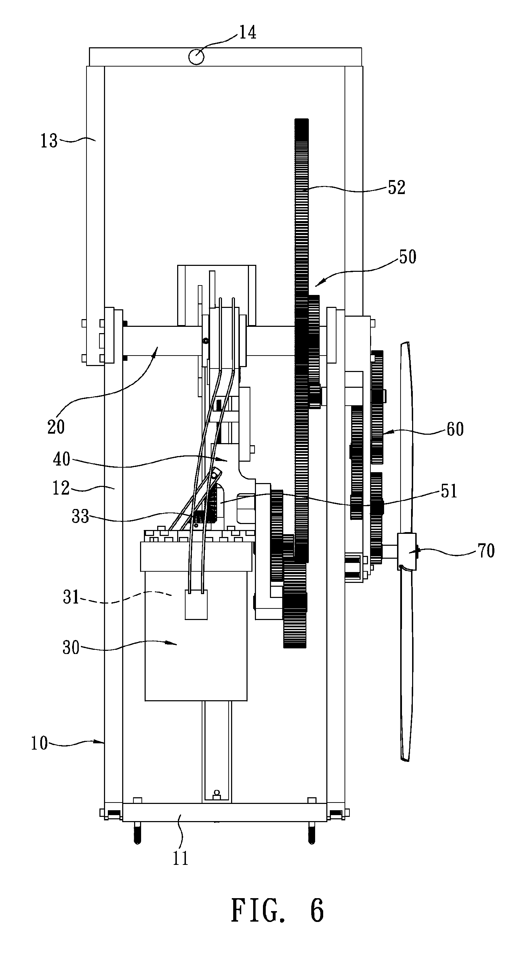

Fig. 6 is a front side view of the embodiment in Fig. 1 according to the present invention;

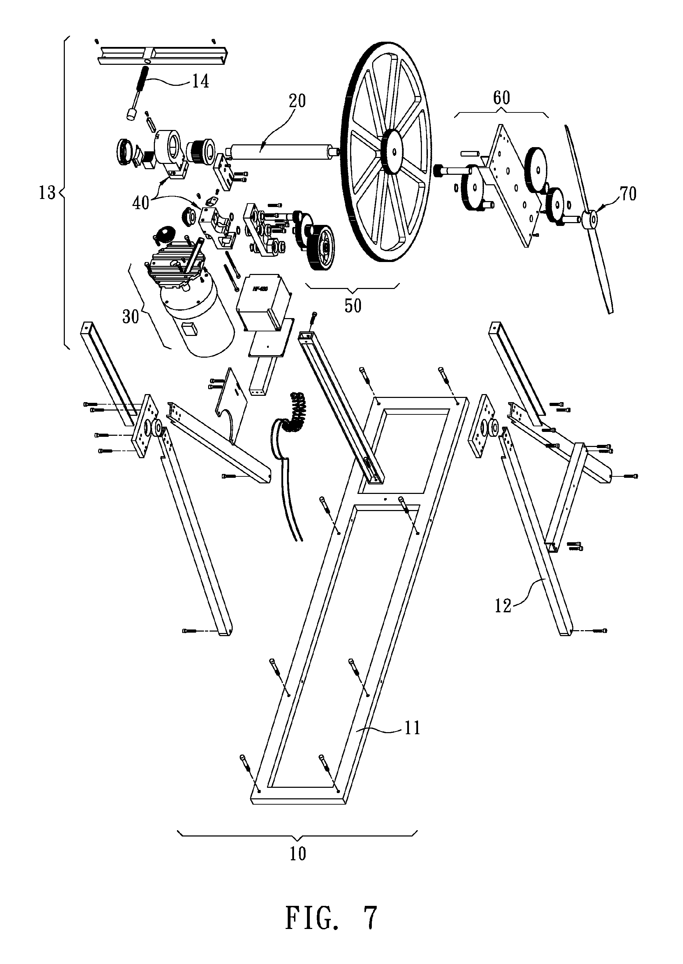

Fig. 7 is an explosive view of the embodiment in Fig. 1 according to the present invention;
Fig. 8A is a schematic drawing showing a half circle rotation (the first half cycle) of the embodiment in Fig. 1 according to the present invention;
Fig. 8B is a schematic drawing showing an automatic turning back process (the other half cycle) of the embodiment in Fig. 1 with the help of gravity according to the present invention;
Fig. 9 is a perspective view of an assembly of a plurality of an energy saving devices viewed at the right viewing angle according to the present invention;
Fig. 10 is a perspective view of the embodiment in Fig. 9 viewed at the left viewing angle according to the present invention.

### DETAILED DESCRIPTION OF THE PREFFERED EMBODIMENT

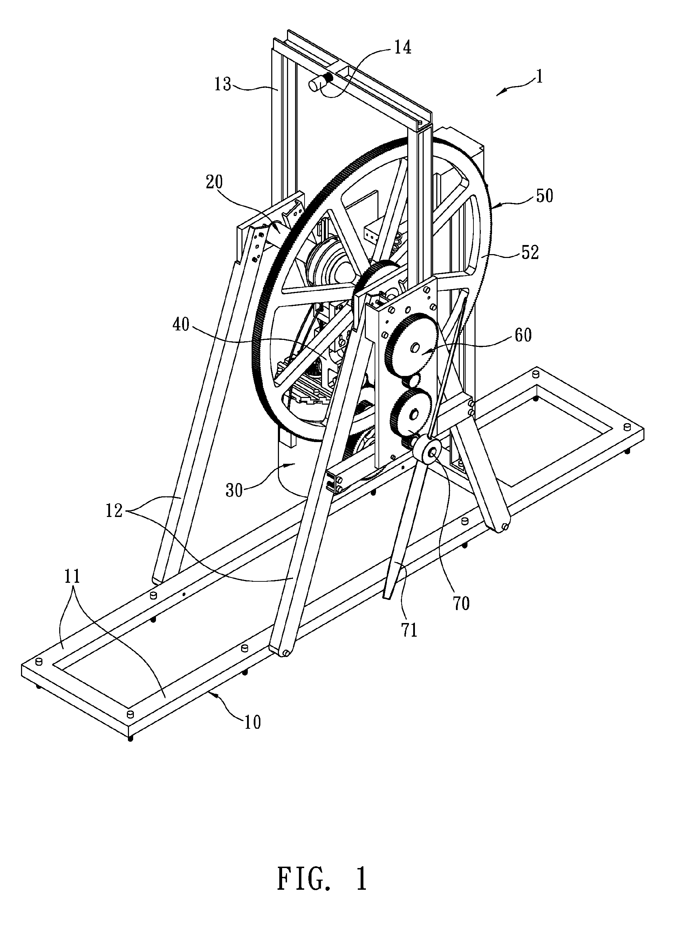

Refer to Fig. 1, an energy saving device rotating a half circle and turning back with the help of gravity 1 of the present invention includes a support base 10, a first rotating shaft 20 for storage of energy, a motor rotor 30, a support arm 40, a first speed change gear mechanism 50, a second speed change gear mechanism 60 and a second rotating shaft 70 for output.

The support base 10 is used for supporting components related to the energy saving device 1 of the present invention including the first rotating shaft 20 for storage of energy, the motor rotor 30, the support arm 40, the first speed change gear mechanism 50, the second speed change gear mechanism 60 and the second rotating shaft 70 for output. Moreover, the energy saving device 1 of the present invention can be fixed on certain positions to be used conveniently by the support base 10 so that the present invention has more applications. There is no limit on the structure of the support base 10. The height, width or support strength of the support base 10 can be modified according to user's needs, arrangement or relative positions of the components. In this embodiment, the support base 10 includes a bottom seat 11 on the bottom thereof, a triangle rack 12 disposed cross and over the bottom seat 11, a frame 13 arranged over the triangle rack 12, and a buffer part 14 is arranged on top of the frame 13.

The first rotating shaft 20 for storage of energy is disposed on the support base 10. In this embodiment, the first rotating shaft 20 for storage of energy is arranged at the triangle rack 12, near the top end thereof but not limited. The first rotating shaft 20 for storage of energy is a single-direction rotating shaft. For example, a ratchet mechanism is used to form the rotating shaft that rotates only in one direction. The internal mechanism of the first rotating shaft 20 for storage of energy can be designed by various types of mechanism to provide single-rotating function.

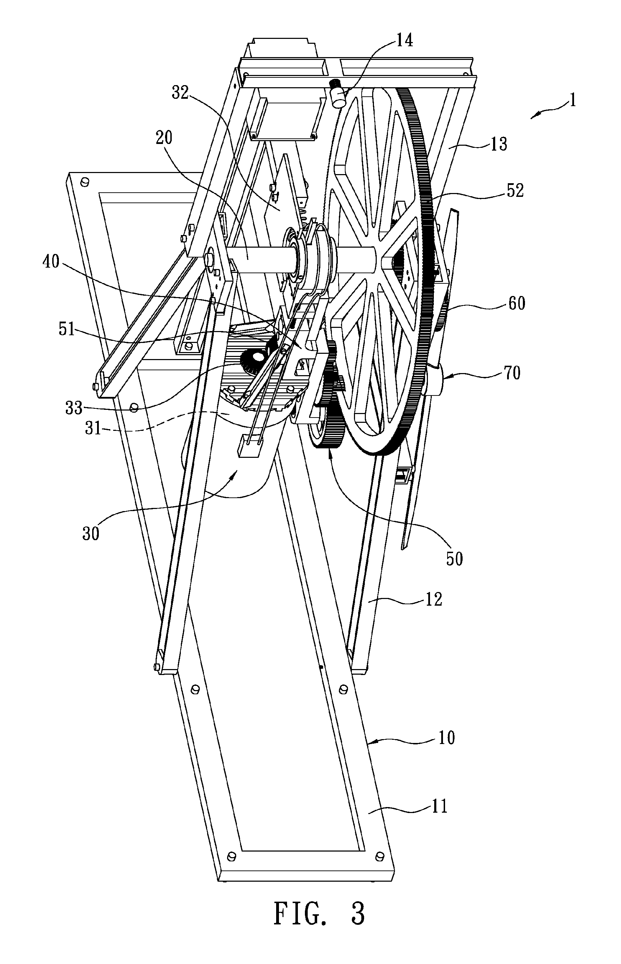

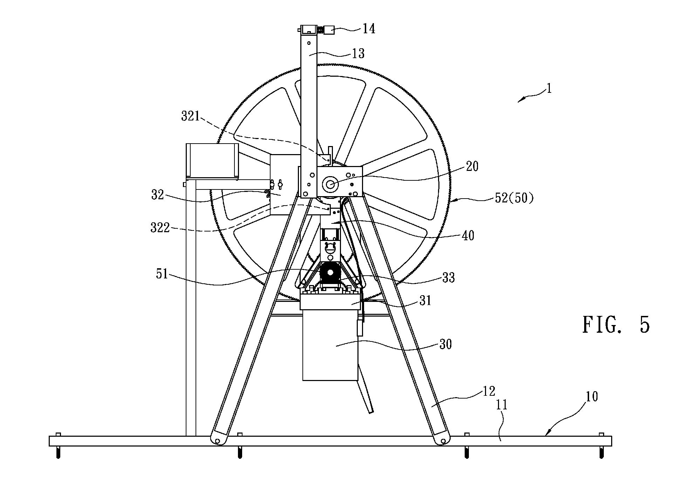

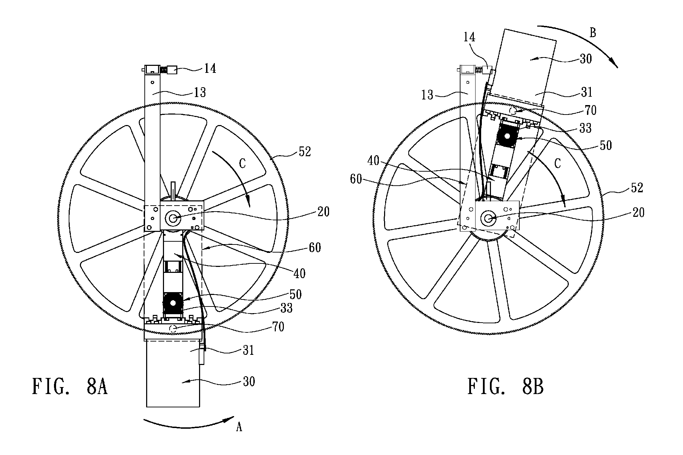

The motor rotor 30 (such as a high efficiency motor) is disposed with a motor mechanism 31 therein for control of a transmission shaft 33 exposed outside to rotate. Moreover, the motor rotor 30 uses a switch control member 32 for control of the transmission shaft 33 of the motor mechanism 31. Take the switch control member 32 shown in Fig. 3 and Fig. 5 as an example. The switch control member 32 is disposed near a center of the first rotating shaft 20 for storage of energy. An upper sensing switch 321 and a lower sensing switch 322 are respectively arranged at an upper end and a lower end of the switch control member 32. When the motor rotor 30 is located at (or arriving) the lowest position (as shown in Fig. 8A), the motor rotor 30 is switched to a power-on state by the lower sensing switch 322 being triggered. When the motor rotor 30 is located at (or arriving) the highest position (as shown in Fig. 8B), the motor rotor 30 is switched to a power-off state by the upper sensing switch 321 being triggered. The mechanical design of the motor mechanism 31 and the switch control member 32 are known to people skilled in the art. The switch control member 32 is used to control on/off and rotation mode of the motor mechanism 31 and the transmission shaft 33. In this embodiment, the motor rotor 30 is controlled by the switch control member 32 to rotate a half circle in an alternate mode. That means in the first one half cycle, the motor rotor 30 is switched to a "power-on (conductive)" state by the switch control member 32 (while the lower sensing switch 322 being triggered) for performing the half circle rotation. In the other half cycle, the motor rotor 30 is switched to a "power-off (non-conductive)" state by the switch control member 32 (while the upper sensing switch 321 being triggered) for stopping rotation.

The support arm 40 is connected to and mounted between the motor rotor 30 and the first rotating shaft 20. Thus the motor rotor 30 rotates a half circle around the first rotating shaft 20 (center of the circle) while the support arm 40 defines a radius of the circle. In this embodiment, the support arm 40 is for supporting the motor rotor 30 so that the motor rotor 30 performs a half-turn rotation around the first rotating shaft 20, between the lowest position and the highest position on a circumference of the circle.

First speed change mechanism 50 is connected to and arranged between the transmission shaft 33 of the motor rotor 30 and the first rotating shaft 20 and is formed by a plurality of gears with different sizes and connected to each other for providing speed change function. In this embodiment, the first speed change mechanism 50 further includes a start-end transmission gear 51 and a finish-end transmission gear 52. The start-end transmission gear 51 is connected to and driven by the transmission shaft 33 of the motor rotor 30 while the finish-end transmission gear 52 is connected to the first rotating shaft 20 so as to drive the first rotating shaft 20 rotating in one direction synchronously. While in use, the start-end transmission gear 51 is driven by the transmission shaft 33 of the motor rotor 30 at a high speed, the movement is transmitted to the finish-end transmission gear 52 due to the speed change function of the first speed change mechanism 50. The first rotating shaft 20 is driven by the finish-end transmission gear 52 to have a single-direction rotation at a lower speed.

Moreover, when the transmission shaft 33 of the motor rotor 30 is rotated at a high speed and the first rotating shaft 20 is rotated in the single direction at a low speed, the motor rotor 30 is synchronously rotated a half-turn around the first rotating shaft 20, along the circumference of the circle whose radius is defined by the support arm 40. That means the motor rotor 30 is rotated around the first rotating shaft 20 from the lowest position on the circumference of the circle (as shown in Fig. 8A) to the highest position (as shown in Fig. 8B) and against the buffer part 14 on the frame 13. Thus a half-turn rotation is completed. Once the motor rotor 30 is rotated to the highest position (as shown in Fig. 8B) after the half-turn rotation, the transmission shaft 33 of the motor rotor 30 is switched to stop rotating under the control of the switch control member 32 (triggering of the upper sensing switch 321). Then motor rotor 30 is moved from the highest position and then turned back to the original lowest position, along the previous half-turn pathway in the opposite direction (as shown in Fig. 8B). At this moment, during the turning back process, the motor rotor 30 is in an idle-running state in relative to the first rotating shaft 20, without affecting the single direction rotation of the first rotating shaft 20 due to the single direction rotation mode of the first rotating shaft 20 for storage of energy. Or when the motor rotor 30 is with a certain weight, the motor rotor 30 drives the first rotating shaft 20 to rotate in the original single direction by the gears of the first speed change mechanism 50 with the help of gravity during the turning back process. In this embodiment, the speed/gear ratio of the transmission shaft 33 of the motor rotor 30 (or the start-end transmission gear 51) to the first rotating shaft 20 (or the finish-end transmission gear 52) is set about 12 : 1. For example, the speed of the first rotating shaft 20 (or the finish-end transmission gear 52) is 125 revolutions per minute (125 revs/min) when the speed of the transmission shaft 33 of the motor rotor 30 (or the start-end transmission gear 51) is set as 1500 revolutions per minute (1500 revs/min).

The second speed change mechanism 60 is connected to and arranged between the first rotating shaft 20 and a second rotating shaft 70 for output and is having a plurality of gears with different sizes and connected to each other for providing speed change function. When the first rotating shaft 20 is rotating at a certain speed such as 125rpm, the second rotating shaft 70 is driven to rotate at a preset speed due to the second speed change mechanism 60. Thus energy is output to drive a load to rotate. In this embodiment, the second rotating shaft 70 is arranged with a blade 71 as a load, as shown in the figure, but the load is not limited to the blade.

Refer to Fig. 8A and Fig. 8B, when the energy-saving device 1 of the present invention starts moving in a cycle, the cycle is divided into a first half cycle and the rest half cycle.
< 1 > The first half cycle: While entering the first half cycle, the motor rotor 30 is switched to the "power-on (conductive)" state under the control of the switch control member 32. Thus the transmission shaft 33 of the motor rotor 30 starts rotating. Now due to the speed change function of the first speed change mechanism 50, the motor rotor 30 drives the first rotating shaft 20 (the finish-end transmission gear 52) to rotate in one direction at low speed clockwise by a driving force of the transmission shaft 33, as an arrow C indicated in Fig. 8A. By the gears of the first speed change mechanism 50, the motor 30 also synchronously rotates around the first rotating shaft 20 counterclockwise, moving from a lowest position shown in Fig. 8A to a highest position shown in Fig. 8B, as an arrow A in Fig. 8A indicated. Thus a half-circle rotation is completed. At the moment, the motor rotor 30 is in contact with the buffer part 14 on the frame 13 so as to reduce the impact force. Then the other half cycle starts.
< 2 > The other half cycle: While entering the other half cycle, as shown in Fig. 8B, the motor rotor 30 is switched to the "power-off (non-conductive)" state under the control of the switch control member 32 so that the transmission shaft 33 of the motor rotor 30 stops rotating. Due to the speed change function of the first speed change mechanism 50, the motor rotor 30 starts moving in the opposite direction (clockwise), as an arrow B in Fig. 8B indicated. Due to that the transmission shaft 33 of the motor rotor 30 already stops rotating and with the help of gravity acted on the motor rotor 30, the motor rotor 30 drives the first rotating shaft 20 (the finish-end transmission gear 52) to rotate in one direction (clockwise) synchronously, as the arrow C indicated in Fig. 8B. By weight of the motor rotor 30 and the gears of the first speed change mechanism 50, the motor rotor 30 moves from the highest position in Fig. 8B to the lowest position in Fig. 8A reversely. Then the device starts the first half cycle of the next circle. When the motor rotor 30 starts moving in the opposite direction (clockwise) due to the gravity, as the arrow B in Fig. 8B indicated, the transmission shaft 33 of the motor rotor 30 already stops rotating at this moment. Once the weight of the motor rotor 30 itself is unable to drive the drives the first rotating shaft 20 (the finish-end transmission gear 52) to rotate, the first rotating shaft 20 can be designed into a ratchet-type single-direction rotating shaft. Thus the motor rotor 30 is running idle in relative to the first rotating shaft 20 and is turning back to the lowest position, as shown in Fig. 8A. Then the next cycle starts.

According to the above description, Fig. 8A and Fig. 8B, no matter in the first half cycle (the half-circle running by external power supply) or the rest half cycle (turning back automatically), the first rotating shaft 20 (the finish-end transmission gear 52) keeps rotating in one direction, as the arrow C in Fig. 8A and Fig. 8B indicated. By means of speed change function and kinetic energy of the second speed change mechanism 60, the second rotating shaft 70 keeps rotating in one direction stably and continues outputting energy.

In other words, during the other half cycle of the energy saving device 1 of the present invention (automatic turning back with the help of gravity), the motor rotor 30 is switched to the "power-off/non-conductive" state. That means no more energy (power) is provided to the motor rotor 30 during the other half cycle. However, when the motor rotor 30 is moved reversely and turning back to the original position with the help of gravity, it can still drives the first rotating shaft 20 (the finish-end transmission gear 52) to rotate in one direction as the arrow C indicated in Fig. 8B (clockwise). Without energy provided to the motor rotor 30 in the rest half cycle, the energy saving device 1 of the present invention can still complete the turning back process with the help of gravity. Compared with other devices that perform full-circle rotation by external power supply, the motor rotor 30 of the present invention performs the half-circle rotation first and then turns back to the original position with the help of gravity under the power-off state. Thus the first rotating shaft 20 continues rotating periodically and the energy-saving effect is achieved.

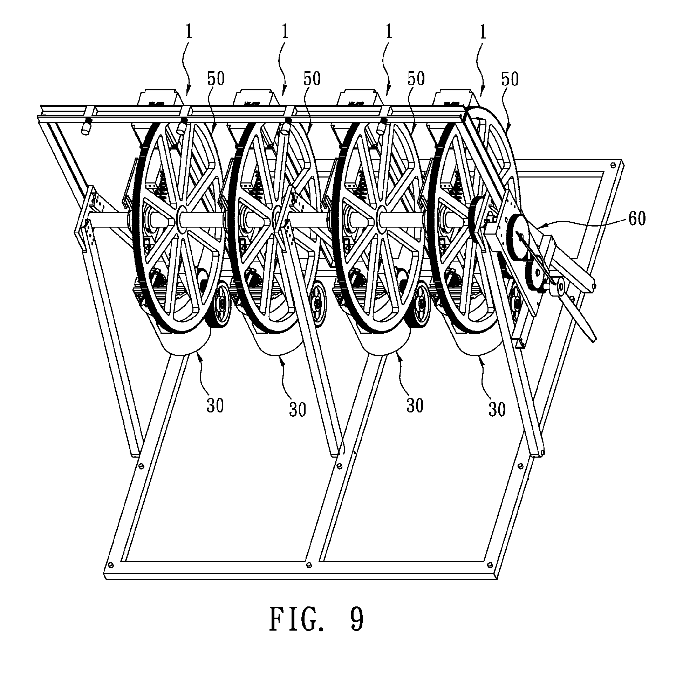

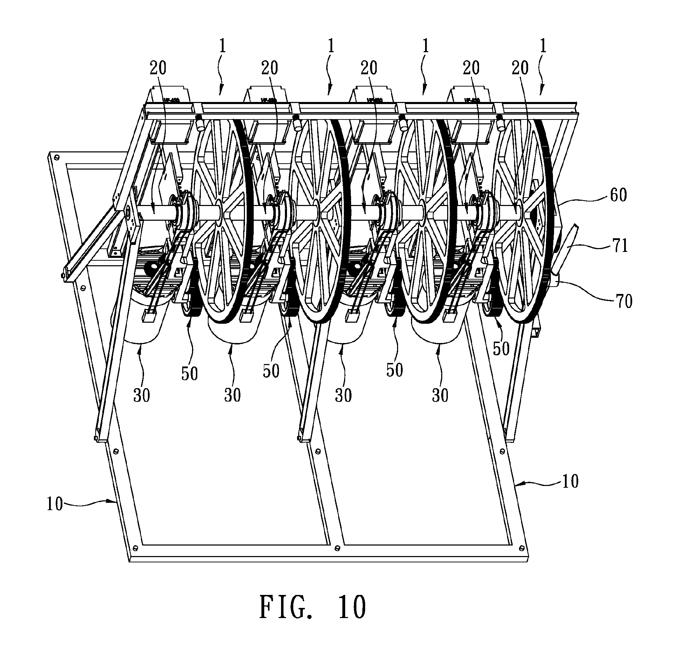

Refer to Fig. 9 and Fig. 10, while in use, a plurality of energy saving devices 1 of the present invention is assembled to form a combined energy saving device. The first rotating shaft 20 of each energy saving device 1 is connected in series to form a rotating shaft that is connected to a second rotating shaft 70 for output by a second speed change gear mechanism 60. Thus energy-saving effect is achieved and total load the second rotating shaft 70 output is increased.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalents.

## Claims

1. An energy saving device that rotates a half circle and turns back with the help of gravity comprising:
a first rotating shaft for storage of energy and rotating in one direction;
a motor rotor disposed with a motor mechanism therein and having a switch control member for control of a transmission shaft thereof to rotate a half circle periodically;
a support arm that is connected between the motor rotor and the first rotating shaft so that the motor rotor performs a periodic half-circle rotation around the first rotating shaft; the first rotating shaft is a center of a circle and a radius of the circle is defined by the support arm;
a first speed change mechanism having a plurality of gears with different sizes, connected to and arranged between the transmission shaft of the motor rotor and the first rotating shaft; the first speed change mechanism having a start-end transmission gear connected to the transmission shaft of the motor rotor, and a finish-end transmission gear connected to and rotating synchronously with the first rotating shaft; by speed change function of the first speed change mechanism, the finish-end transmission gear drives the first rotating shaft to rotate at a low speed in one direction while the start-end transmission gear is driven by the transmission shaft of the motor rotor at high speed;
a second speed change mechanism having a plurality of gears with different sizes; the second speed change mechanism being connected to and disposed between the first rotating shaft and a second rotating shaft for output so as to make rotating first rotating shaft drive the second rotating shaft to rotate continuously; and
a support base that is used for supporting the first rotating shaft for storage of energy, the motor rotor, the support arm, the first speed change (transmission) gear, the second speed change (transmission) gear and the second rotating shaft for output;
wherein in the first half cycle of the periodical half-circle rotation, the motor rotor is switched to a power-on state by the switch control member so that the transmission shaft of the motor rotor starts rotating; with the help of the speed change function of the first speed change mechanism, the motor rotor drives the first rotating shaft to rotate in one direction at low speed by a driving force of the transmission shaft and the motor rotor is synchronously rotated a half circle, from a lowest position on a circumference of the circle to a highest position on the circumference of the circle; a half-circle rotation is completed and then the other half cycle starts;
wherein in the other half cycle, the motor rotor is switched to a power-off state by the switch control member so that the transmission shaft of the motor rotor stops rotating; by the speed change function of the first speed change mechanism, the motor rotor moves from the highest position on the circumference along the half circle of the first half cycle back to the lowest position on the circumference with the help of the gravity; then the first half cycle of the next circle starts.

2. The device as claimed in claim 1, wherein the motor rotor drives the first rotating shaft to rotate in one direction with the help of gravity when the motor rotor moves from the highest position on the circumference along the half circle of the first half cycle back to the lowest position of the circumference.

3. The device as claimed in claim 1, wherein the motor rotor is running idle in relative to the first rotating shaft when the motor rotor moves from the highest position on the circumference along the half circle of the first half cycle back to the lowest position of the circumference.

4. The device as claimed in claim 1, wherein a speed ratio of the rotating shaft of the motor rotor to the first rotating shaft is 12:1.

5. The device as claimed in claim 1, wherein the support base includes a bottom seat disposed on bottom thereof, a triangle rack arranged cross and over the bottom seat, and a frame set over the triangle rack.

6. The device as claimed in claim 1, wherein a buffer part is disposed on the support base so that the motor rotor is against the buffer part while rotating to the highest position.

7. The device as claimed in claim 1, wherein the switch control member is arranged near a center of the first rotating shaft for storage of energy; an upper sensing switch and a lower sensing switch are respectively disposed at an upper end and a lower end of the switch control member; the lower sensing switch is triggered by the motor rotor and switched to the power-on state when the motor rotor turns back to the lowest position; the upper sensing switch is triggered by the motor rotor and switched to the power-off state when the motor rotor is rotated to the highest position.
